# EUROPEAN PATENT SPECIFICATION

(11) **EP 2 383 110 B1**
(45) Date of publication and mention of the grant of the patent: **26.06.2013**
(21) Application number: 11164372.2
(22) Date of filing: 29.04.2011
(51) Int. Cl.: B32B 3/14, B32B 3/30, B32B 21/00, B44C 5/04, B32B 21/10, B32B 21/14, B27D 1/00

(54) **Decorative embossed sheets for covering panels, particularly for the furniture industry, and related production method**
Dekorative geprägte Platten zur Abdeckung von Paneelen, insbesondere für die Möbelindustrie, sowie zugehöriges Herstellungsverfahren
Feuilles gaufrées décoratives pour recouvrir des panneaux, en particulier pour l'industrie de l'ameublement, et procédé de production correspondant

(30) Priority: 30.04.2010 IT MI20100749
(43) Date of publication of application: 02.11.2011
(73) Proprietor: BVR S.r.l., 22040 Lurago d'Erba (Como) (IT)
(72) Inventor: Orio, Stefano, 22044, INVERIGO (COMO) (IT); Broggi, Paolo, 22044, INVERIGO (COMO) (IT)
(74) Representative: Petruzziello, Aldo

(56) References cited:
- EP-A2- 1 683 630
- DATABASE WPI Week 199409 Thomson Scientific, London, GB; AN 1994-071473 XP002046641, -& JP 6 023911 A (DAINIPPON PRINTING CO LTD) 1 February 1994 (1994-02-01)

## Description

### DESCRIPTION

The present invention relates to the sector of materials for covering and cladding panels or panellings normally used in the furniture and doors sector.

More particularly the present invention relates to covering materials as defined above, suitable for providing the surfaces of furniture and/or doors with an embossed finish having an improved surface uniformity, said materials being formed by the joining of a plurality of pieces superficially finished and embossed.

In the furniture sector there is constant demand for an increase in the pleasing appearance of furniture and/or veneered doors by means of the use of surface finishes of particular aesthetic value, for example by providing the veneer with a lacquer, gloss, embossed finish or another type of finish.

A particularly popular visual effect is the one obtained by the combination of veins having different directions or of wood types of different colours/veins where the veins are created and/or emphasised by means of a phase of brushing suitable for accentuating the cavity of the natural pore of the wood or by means of mechanical embossing of the covered panel.

Brushing is a process which is generally performed on a substrate in wood in order to create the relief of the veins typical of when the wood ages and is consumed, while mechanical embossing is generally performed on substrates in any material, generally different from wood, in order to create raised designs which imitate the veins of the wood, or patterned designs.

The covering of said veneered panels is formed by gluing a sheet of covering material with a wood base on the surface of panels or panellings of MDF or another material, appropriately prepared, and then treating the covered panel so as to confer the required effect, for example by dyeing or final painting.

The aforesaid sheet is prepared by joining one to the other, with glue or thread or paper, a plurality of unfinished pieces (not painted or without surface finish), sectioned to size from a sheet of wood of a specific wood type without surface finish, which can also have been optionally backed and possibly smoothed.

Additionally said pieces can also be brushed with the aim of opening the pores of the wood and of creating slight cavities and scorings which emphasise the veining in order to give an antique-wood and/or smoothed effect.

After having glued to the panel the aforesaid joined sheet, with the aid of a smooth flat press, the subsequent operations of surface finishing of the covered panel, such as dyeing as in the case of a wenge finish, and/or final painting of the covered panel, are carried out if not already performed previously and/or embossing by means of an embossing plate.

This process of covering is fairly complex and difficult to standardise since it requires the use of numerous phases of processing with the intervention of several people: in fact, if a combination of colours/veins different one in relation to the other is to be obtained on the finished panel for conferring a particular aesthetic effect in terms of colour and/or direction of the embossing lines, it is necessary to subject the covered panel to the different types of embossing with the consequent disadvantage of having to move the panel several times: this is particularly disadvantageous in the case of large dimensions of the same.

In particular, when different types of embossing are to be reproduced on the same covered panel, it is necessary to use several embossing plates, each one having a particular relief: this entails a considerable waste of time for the replacement of the various different embossing plates and the need to employ several people for handling these plates seeing that they generally have dimensions comparable to the panels to be covered, or even larger.

In practice, the greater the complexity of the visual effect required, the greater the number of phases of surface finishing whereto the panel has to be subjected: this entails long times of manufacturing of the superficially finished product and employment of several people.

The patent application JP 06 023911 describes a material embossed on the surface and suitable for covering panels, which has as surface finish a transparent or translucent thermoplastic film, applied over a substrate formed by a veneered material and backed. This application does not describe covering sheets formed by the joining or splicing of a plurality of pieces having a finished and embossed surface, also different one in relation to the other in the material, in the surface finish and/or in the dimensions.

The use of a polymeric film as transparent surface finish, in place of a layer of paint or lacquer, may entail in time a detachment of the film from the substrate, in particular in warm environments, with a consequent loss of aesthetic value.

The object of the present invention is to provide a covering to be applied to panels to be veneered which has a pleasing aesthetic appearance with durable effects, which has such a surface finish of the embossed type and/or veins as not to require handling of the covered panel, and has at the same time excellent resistance to abrasion, scratching and the action of chemical substances.

Another object of the present invention is to provide such a covering which is ready for use to be applied to the panel to be covered so as to employ the shortest time possible in veneering and the smallest number of people.

These objects are achieved by the joined embossed sheet in accordance with the invention having the features listed in the annexed independent claim 1.

A further object of the present invention is to provide a process for the production of coverings with veins and/or embossings for panels or panellings of furniture, doors and furnishings in general, able to overcome the disadvantages of the prior art, and which is practical, economical and easy to produce, applicable to panels of any size, and with less time wasted.

This object is achieved in accordance with the invention with the features listed in the annexed independent claim 1.

Advantageous embodiments of the invention are disclosed by the dependent claims.

The covering sheets of the present invention, which are suitable for covering panels and panellings for furniture, have the dimensions of the panels/panellings to be covered and are formed by the joining or splicing of a plurality of pieces provided with surface finish and embossed, said pieces being identical or different one in relation to the other in the material, in the surface finish and/or in the dimensions.

Each of said pieces derives from the sectioning of a sheet of embossed material which can have any size, also smaller dimensions compared to those of the panel to be covered.

Said sheet of embossed material, which is preferably in the form of a roll, is made up of a thin sheet of wood or multilaminar wood on whose surface a layer of transparent finishing paint is placed over which mechanical embossing is performed, preferably with embossing cylinders.

Said sheet of wood or multilaminar wood is also preferably coupled to a backing substrate which also facilitates adhesion to the panels or panellings to be covered.

In practice, by using the combination of pieces already surface finished and embossed as covering material sheet it is no longer necessary to carry out any surface finish on the covered panel, as instead takes place in the prior art.

This is particularly advantageous as regards the times of production of a covered panel which, thanks to the present invention, are much shorter compared to the prior art. Moreover it is no longer necessary to handle the covered panel and it is possible to create on the same panel particular pattern effects by means of the combination of different aesthetic effects which otherwise would not be obtained by using the embossing plates.

The sheet of wood which constitutes one of the layers of the present covering material is formed by one or more small sheets of real sliced wood, whether natural or obtained by means of particular processing operations of the wood itself (known as multilaminar / reconstituted / fineline).

Each one of the finished parts which go to form by means of joining the covering sheets defined above in accordance with the invention is therefore a multilayer laminate, wherein the surface of the layer of wood may have been subjected also to smoothing and/or dyeing, if necessary, before final painting and embossing.

Further features of the invention will be made clearer by the following detailed description, referred to one of its embodiments purely by way of a non-limiting example illustrated in the accompanying drawings, in which:
Figs. 1 a), b), c) are perspective views illustrating schematically the phases of production of the embossed covering material in the form of a roll according to the invention;
Fig. 2 is an enlarged cross section view along the section plane II-II of Fig. 1 c);
Fig. 3 is a schematic top view of the embossed material of the invention cut into pieces of various sizes to make the embossed finished covering sheets illustrated in Figures 5 a) and b);
Figs. 4 a), b), c) are schematic plan views of the rear of two pieces of embossed material of the invention illustrating the different types of join;
Figs. 5 a), b) are top views of two different embossed finished covering sheets obtained from the different combination of the pieces of Fig. 3 during their joining.

With the aid of the drawings a description is given of the method of production of covering material in a roll.

It starts with small sheets of sliced wood 2 obtained from the previous slicing or peeling of trunks of wood. Alternatively it can start with sliced multilaminar wood. The sliced multilaminar wood is obtained by gluing one to the other various sheets of coloured wood (usually not high quality) as if to obtain a new trunk and then by slicing this multilaminar wood. The various layers of coloured wood simulate the rings of the trunk of wood, re-creating the veins of the normal sliced wood.

These sheets of multilaminar or sliced wood 2 may have a thickness of approximately 0.2 ― 1 mm, preferably from 0.5 mm to 0.8 mm, more preferably 0.5 mm.

Subsequently the small sheets of wood 2 are joined longitudinally to obtain the required width of the roll which is to be used in the subsequent phases of processing.

The small sheets of wood 2 are squared and joined transversely, generally with a comb A or straight pattern, by means of the application of an adhesive tape 3 (Fig, 1a). Then the various small sheets of wood 2 joined continuously form a single sheet of wood 20, of predefined width, which is rolled up so as to obtain a roll 21.

In practice the longitudinal joining of the small sheets 2 is suitable for conferring a predetermined width to the roll 21 while the subsequent transverse joining of said small sheets 2 is suitable for obtaining a single sheet of wood 20 of preset length to be rolled up in the form of a roll 21.

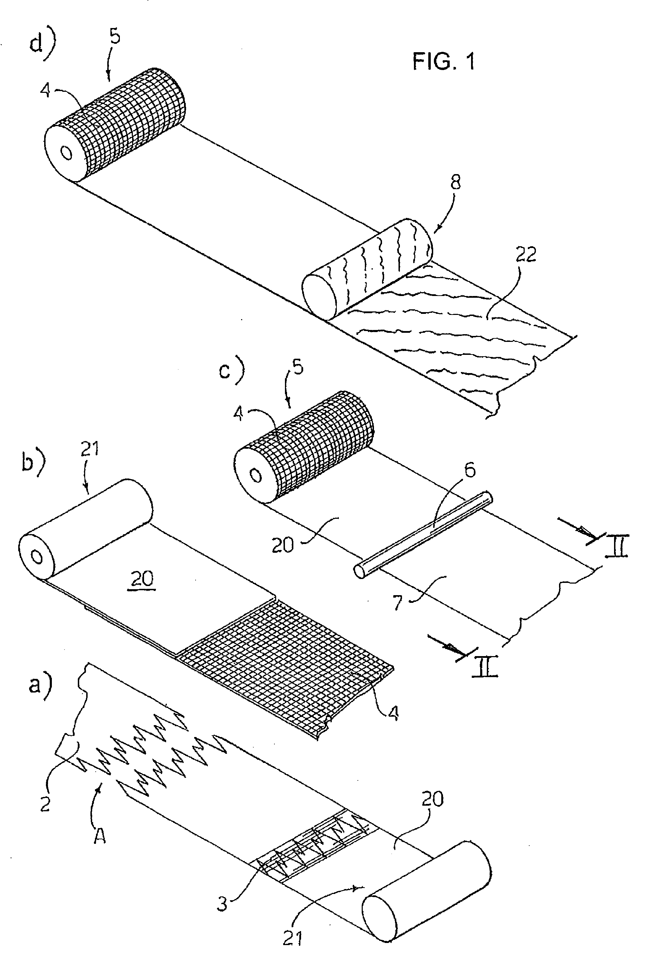

The rolls 21 of sheets of wood, obtained in this way, can be processed on machines with a continuous process. The processing operations which can be carried out, individually or in combination one with the other, are:
1) Operations of backing. They consist of the gluing of a backing substrate 4 on the sheet of wood 20 reeled out from the roll 21 (Fig. 1b). The backing substrate 4 for the sheet of wood 20 can be impregnated paper, plastic film, nonwoven fabric (NWF) and the like, preferably NWF of cellulosic fibre. The backing material 4 has the function of ensuring a better grip on the surface whereon the sheet of wood has to be applied.
2) Operations of smoothing. They consist of calibration of the sheet of wood 20 reeled out from the roll 21 in order to arrive at the required thickness.
3) Operations of dyeing. They consist of colouring of the sheet of wood 20 reeled out from the roll 21 in order to obtain the required colour.

Clearly, according to the invention, one or more of the operations mentioned above can be carried out, and it is preferable to perform at least the operation of backing.

After said operations, the sheet of wood 20, preferably provided with the backing substrate 4, is wound into a reel 5. The reel 5 is fed towards a lacquering machine 6 (Fig. 1c) which deposits a layer of transparent paint 7 on the surface of the sheet of wood 20. The paint 7 is generally acrylic or polyurethanic. The thickness of this layer of paint is of the order of a few microns.

Mechanical embossing is then performed on the painted surface 7 of the aforesaid sheet in a roll according to different designs by means of the use of an embossing cylinder 8 (Fig. 1d) provided with incisions able to execute the required design and mounted on an embossing machine (not shown in the drawing) which is provided with cylinders 8 appropriately prepared for imitation of the various pores of the wood or of particular pattern effects. In this way a sheet of material with an embossed surface 22 is obtained.

Said mechanical embossing can be performed using a flat press, as an alternative to the cylinder 8, also provided with incisions able to execute the required design, similarly to what is described above, even if advantageously it is preferable to use embossing cylinders.

It is to be understood that the various phases of preparation of the covering disclosed above can also be performed when it is not necessary to have the covering material in the form of a roll (with the exception of the phases necessary for the formation of a roll).

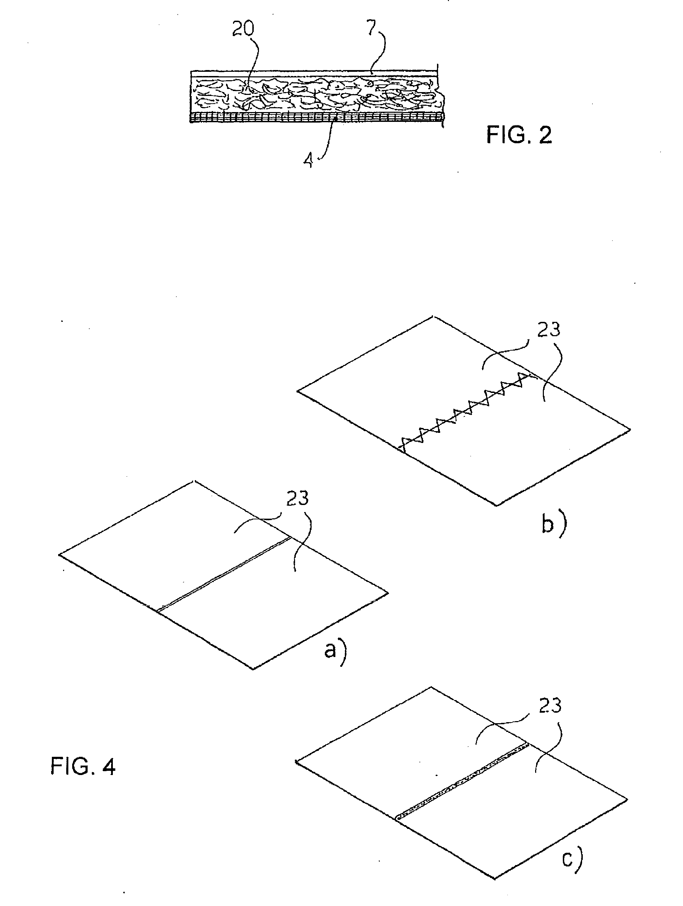

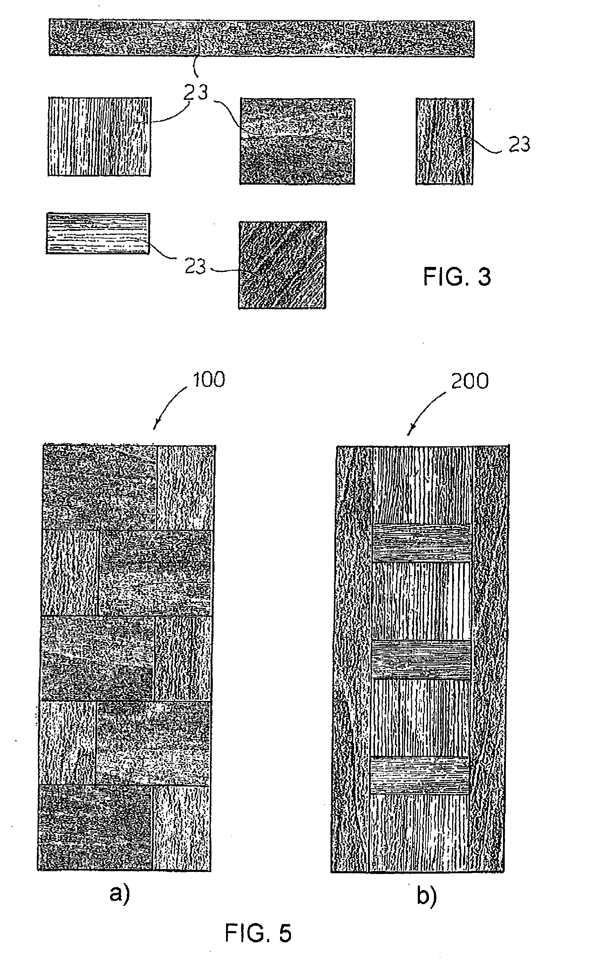

Subsequently sectioning of the embossed sheet 22 takes place in order to form pieces 23 (Fig. 3) of the required size, intended to be joined on the back with other pieces 23 (Figs. 4 a), b), c)) in order to form a finished covering sheet 100, 200 representing a predefined decorative pattern and having a preset size.

Indeed the sectioned pieces 23 can be joined one to the other so as to obtain symmetrical patterns to simulate the veins of a trunk of wood, or in an asymmetrical manner so as to create optical effects using slices of woods of a different or the same colour.

As illustrated in Figs. 4 a),b),c), the joining between two adjacent pieces 23 can be performed by means of glue (Fig. 4a), hot-melt glue thread (Fig. 4b) or paper (Fig. 4c), preferably by means of thread. This joining is performed on the side of the backing substrate 4.

It is to be understood that the number of pieces 23 which goes to form the sheet 100, 200, and the dimensions of said pieces 23 is not binding for the purposes of the present invention.

Once the sheet 100, 200 has been obtained, it is glued over a panel/panelling (not illustrated in the drawing) which constitutes the core of the covered panel/panelling. Even if this is not binding for the purpose of the present invention, said panels or panellings to be covered generally have a flat surface, a thickness of 4-6 mm, and are formed by any material for panels (chipboard, melamine-faced panel MDF, honeycomb ) by means of a traditional press. Nevertheless different panels/panellings can also be used.

After having been covered with the embossed sheet 100, 200 in accordance with the invention, the panels/panellings can be applied to perimeter frames of doors or of wardrobes so as to form the external surface of furniture such as wardrobes or doors, without having to apply the external paint finish generally used over the embossed surfaces of the art.

It is also possible to start with sheets 21, also not in a roll, already provided with surface finishing paint and subject them subsequently to embossing and subsequent sectioning (cutting) so as to obtain embossed finished pieces 23 to be joined according to the method described above.

In practice, the advantage of the present invention lies in the fact that when a panel covered with a combination of veins/colours different one from the other is required, it is no longer necessary to subject the covered panel several times to the different types of surface finishing such as brushing/colouring, embossing.

In fact, in accordance with the present invention, it is simply sufficient to apply to the panel to be covered a sheet which is the joining of pieces of covering material already surface finished, identical or different one from the other and combined so as to provide the required visual effect, without having to subject the covered panel to several phases of surface finishing and having to use different types of flat plates for the embossing of the panel, also avoiding the various movements of the same panel.

Therefore it is no longer necessary to carry out any surface finishing on the covered panel, as instead takes place in the prior art. This is particularly advantageous as regards the times of production of a covered panel which, thanks to the present invention, are much shorter compared to the prior art.

In this way moreover the number of possible effects which can be obtained is increased with the consequent advantage of versatility of the covering sheet of present invention.

Numerous detail modifications and changes, within the reach of a person skilled in the art, may be made to the present embodiment of the invention, in any case coming within the scope of the invention disclosed by the annexed claims.

## Claims

1. Embossed sheets (100, 200) suitable for covering panels or panellings, formed by joining a plurality of embossed finished pieces (23) identical or different one from the other, provided with a superficial finishing with paint, said embossed superficially finished pieces (23) being sectionable from at least one embossed covering material (22), which is composed of a backing substrate (4) and of a sheet of wood (20) on whose surface a transparent layer (7) of finishing paint has been placed which H (7) subsequently has been mechanically embossed.

2. Sheets according to claim 1 wherein the joining of said pieces (23) is performed by means of glue, hot-melt glue thread or paper.

3. Sheets according to claim 2 wherein the joining of said pieces (23) is performed by means of thread.

4. Sheets according to any one of the previous claims wherein the backing substrate (4) is selected from impregnated paper, plastic film, nonwoven fabric (NWF), and wood.

5. Sheets according to claim 4 wherein the backing substrate (4) is an NWF of cellulosic fibre.

6. Sheets according to any one of the previous claims wherein the wood of the sheet (20) is a sliced wood or multilaminar wood and wherein the thickness of said sheet (20) ranges from 0.2 to 1 mm.

7. Panels, panellings for furniture and doors covered with embossed sheets (100, 200) as defined in any one of claims 1-6.

8. Covered panels, panellings according to claim 7 wherein the covering of said panel/panelling is performed by gluing said sheets (100, 200).

9. Covered panels, panellings according to claim 7 or 8 wherein the core material of said panels or panellings is selected from chipboard, melamine-faced panel, MDF, and honeycomb.

10. Covered panels, panellings according to claim 9 wherein the thickness of the core is 4-6 mm.

11. Furniture, preferably wardrobes, and doors comprising the covered panels and/or panellings as defined in any one of claims 7 to 10.

12. Method for preparing embossed sheets (100, 200) as defined in the previous claims, comprising:
longitudinal joining of small sheets of sliced wood or multilaminar wood (2) in order to obtain a required width for a roll (21),
subsequently transverse joining of said small sheets (2), generally with a comb or straight pattern, by applying an adhesive tape (3) such as to obtain a single sheet of wood (20) of preset length, which is preferably rolled up such as to obtain a roll (21), gluing of a backing substrate (4) on said sheet of wood (20), optionally reeled out from the roll (21),
optionally smoothing and/or dyeing of the surface of the sheet (20),
placing of a layer of transparent finishing paint (7) on the surface of the sheet H of wood (20), optionally smoothed and/or dyed,
mechanical embossing on the painted surface (7) of the aforesaid sheet (20) thus obtaining an embossed sheet (22),
sectioning of at least one sheet of said embossed material (22) into one or more embossed finished pieces (23),
joining, on the side of the backing substrate (4), of a plurality of the embossed finished pieces (23) provided with surface finish with paint, in order to obtain the embossed sheets (100, 200).

## Patentansprüche

1. Geprägte Platten (100, 200), die zum Abdecken von Paneelen und Paneelverkleidungen geeignet sind und durch Aneinanderfügen mehrerer geprägter behandelter Stücke (23) gebildet sind, die identisch sind oder sich voneinander unterscheiden und mit einer Oberflächenbehandlung mit Lack versehen sind, wobei die geprägten, oberflächenbehandelten Stücke (23) von mindestens einem geprägten Abdeckmaterial (22) abtrennbar sind, das aus einem Trägersubstrat (4) und einer Platte aus Holz (20) besteht, auf deren Oberfläche eine transparente Schicht (7) aus Decklack angeordnet wurde und die anschließend mechanisch geprägt wurde.

2. Platten nach Anspruch 1, wobei das Aneinanderfügen der Stücke (23) mittels Leim, Heißleimfaden oder -papier erfolgt.

3. Platten nach Anspruch 2, wobei das Aneinanderfügen der Stücke (23) mittels Faden erfolgt.

4. Platten nach einem der vorhergehenden Ansprüche, wobei das Trägersubstrat (4) aus imprägniertem Papier, Kunststofffolie, Vliesstoff und Holz ausgewählt ist.

5. Platten nach Anspruch 4, wobei das Trägersubstrat (4) ein Vliesstoff aus Zellulosefaser ist.

6. Platten nach einem der vorhergehenden Ansprüche, wobei das Holz der Platte (20) gemessertes oder Multilaminat-Holz ist und wobei die Dicke der Platte (20) im Bereich von 0,2 bis 1 mm liegt.

7. Paneele, Paneelverkleidungen für Möbel und Türen, die mit geprägten Platten (100, 200) nach einem der Ansprüche 1 bis 6 abgedeckt sind.

8. Abgedeckte Paneele, Paneelverkleidungen nach Anspruch 7, wobei das Abdecken des Paneels / der Paneelverkleidung durch Aufleimen der Platten (100, 200) erfolgt.

9. Abgedeckte Paneele, Paneelverkleidungen nach Anspruch 7 oder 8, wobei das Kernmaterial der Paneele oder Paneelverkleidungen aus Holzspanplatte, melaminbeschichteter Platte, mitteldichter Faserplatte (MDF) und Wabenplatte ausgewählt ist.

10. Abgedeckte Paneele, Paneelverkleidungen nach einem der vorhergehenden Ansprüche, wobei die Dicke des Kerns 4 bis 6 mm beträgt.

11. Möbel, vorzugsweise Schränke, und Türen, umfassend die abgedeckten Paneele und/oder Paneelverkleidungen nach einem der Ansprüche 7 bis 10.

12. Verfahren zum Herstellen geprägter Platten (100, 200) nach den vorhergehenden Ansprüchen, umfassend:
Aneinanderfügen in Längsrichtung von kleinen Platten aus gemessertem Holz oder Multilaminat-Holz (2), um eine erforderliche Breite für eine Rolle (21) herzustellen, anschließendes Aneinanderfügen in Querrichtung der kleinen Platten (2), im Allgemeinen in einem Kamm- oder geraden Muster, durch Aufbringen eines Klebebandes (3), um so eine einzelne Platte aus Holz (20) mit einer vorgegebenen Länge herzustellen, die vorzugsweise aufgerollt wird, um so eine Rolle (21) herzustellen,
Leimen eines Trägersubstrats (4) an die Platte aus Holz (20), die optional von der Rolle (21) abgewickelt wird,
optionales Glätten und/oder Färben der Oberfläche der Platte (20),
Anordnen einer Schicht aus transparentem Decklack (7) auf der Oberfläche der Platte aus Holz (20), die optional geglättet und/oder gefärbt wurde,
mechanisches Prägen der lackierten Oberfläche (7) der Platte (20), um so eine geprägte Platte (22) herzustellen,
Durchtrennen mindestens einer Platte des geprägten Materials (22) in eines oder mehrere behandelte geprägte Stücke (23),
Aneinanderfügen mehrerer behandelter geprägter Stücke (23), die mit einer Oberflächenbehandlung aus Lack versehen sind, an der Seite des Trägersubstrats (4), um die geprägten Platten (100, 200) herzustellen.

## Revendications

1. Feuilles gaufrées (100, 200) appropriées pour recouvrir des panneaux ou des habillages, formées par jonction d'une pluralité de pièces de finition gaufrées (23) identiques ou différentes les unes des autres, fournies avec une finition superficielle avec une peinture, lesdites pièces de finition superficiellement gaufrées (23) pouvant être sectionnées à partir d'au moins un matériau de revêtement gaufré (22), qui est composé d'un substrat support (4) et d'une feuille de bois (20) sur la surface de laquelle une couche transparente (7) de peinture de finition a été placée qui a été ensuite gaufrée de façon mécanique.

2. Feuilles selon la revendication 1, dans lesquelles la jonction desdites pièces (23) est réalisée au moyen d'une colle, d'une colle thermofusible, d'un filetage ou d'un papier.

3. Feuilles selon la revendication 2, dans lesquelles la jonction desdites pièces (23) est réalisée au moyen d'un filetage.

4. Feuilles selon l'une quelconque des revendications précédentes, dans lesquelles le substrat support (4) est sélectionné parmi du papier imprégné, du film plastique, un textile non tissé (TNT), et du bois.

5. Feuilles selon la revendication 4, dans lesquelles le substrat support (4) est un TNT de fibre cellulosique.

6. Feuilles selon l'une quelconque des revendications précédentes, dans lesquelles le bois de la feuille (20) est un bois tranché ou un bois multilaminaire et dans lesquelles l'épaisseur de ladite feuille (20) varie de 0,2 à 1 mm.

7. Panneaux, habillages pour meubles et portes revêtus de feuilles gaufrées (100, 200) telles que définies dans l'une quelconque des revendications 1 à 6.

8. Panneaux, habillages revêtus selon la revendication 7, dans lesquels le revêtement dudit panneau/habillage est réalisé par collage desdites feuilles (100, 200).

9. Panneaux, habillages revêtus selon la revendication 7 ou la revendication 8, dans lesquels le matériau de coeur desdits panneaux ou habillages est sélectionné parmi un panneau de particules, un panneau revêtu de mélamine, du MDF, et un panneau en nid d'abeilles.

10. Panneaux, habillages revêtus selon la revendication 9, dans lesquels l'épaisseur du coeur est de 4 - 6 mm.

11. Meubles, de préférence armoires, et portes comprenant les panneaux et/ou habillages revêtus tels que définis dans l'une quelconque des revendications 7 à 10.

12. Procédé pour la préparation de feuilles gaufrées (100, 200) telles que définies dans les revendications précédentes, comprenant les étapes consistant à :
joindre de façon longitudinale des petites feuilles de bois tranché ou de bois multilaminaire (2) afin d'obtenir une largeur requise pour un rouleau (21),
joindre ensuite de façon transversale lesdites petites feuilles (2), en général avec un motif en peigne ou droit, par application d'un ruban adhésif (3) de façon à obtenir une feuille unique de bois (20) d'une longueur prédéterminée, qui est de préférence enroulée afin d'obtenir un rouleau (21),
coller un substrat support (4) sur ladite feuille de bois (20), éventuellement dévidée du rouleau (21),
éventuellement lisser et/ou teinter la surface de la feuille (20),
placer une couche de peinture de finition transparente (7) sur la surface de la feuille de bois (20), éventuellement lissée et/ou teinte,
effectuer un gaufrage mécanique sur la surface peinte (7) de la feuille mentionnée ci-dessus (20) pour ainsi obtenir une feuille gaufrée (22),
sectionner au moins une feuille dudit matériau gaufré (22) en une ou plusieurs pièces de finition gaufrées (23),
joindre, sur le côté du substrat support (4), une pluralité des pièces de finition gaufrées (23) fournies avec une finition de surface à la peinture, afin d'obtenir les feuilles gaufrées (100, 200).
